# EUROPEAN PATENT APPLICATION

(11) **EP 1 345 388 A2**
(43) Date of publication of application: **17.09.2003**
(21) Application number: 03250704.8
(22) Date of filing: 04.02.2003
(51) Int. Cl.: H04L 29/08, H04L 29/06, G06F 9/445, G06F 13/00

(54) **Method for communicating service related information from a peripheral device to service provider**

(30) Priority: 14.03.2002 US 99345
(71) Applicant: Hewlett-Packard Company, Palo Alto, CA 94304 (US)
(72) Inventor: Nutt, Letty B., Boise, Idaho 83702 (US); Cox, William A., Melbourne, FL 32934 (US)
(74) Representative: Jehan, Robert

(57) **Abstract**

In a distributed computing environment (100), the described subject matter is a method how a peripheral device (108) that responsive to being powered on, automatically communicates service related information (218) to an entity (112) associated with a service provider (102).

## Description

The described subject matter of the present invention relates to a method of communicating with a peripheral device, for example for automatically harvesting or acquiring data corresponding to networked peripheral device operations.

For an organization to support peripheral device related services such as a pay-per-page service on a printer, the organization typically needs to periodically gather specific service related information (e.g., the number of pages printed per job customer job request, and so on) from each networked peripheral device involved in the service. There are a number of known techniques to periodically gather such service related information. Unfortunately these known techniques are substantially limited for a number of reasons.

For instance, one conventional technique requires individuals to regularly intervene or interface in some manner with the operation of each respective peripheral device involved in the service to obtain and transmit such service related information (e.g., by mail or fax) to a centralized service information repository of the service provider. Requiring regular human intervention to perform procedures that could otherwise be performed automatically is substantially inefficient and prone to human error.

Other conventional techniques that attempt to automatically obtain and transmit such service related information to a centralized repository require software and/or hardware to be installed at each respective service site or external to the service sites. Such software and/or hardware is often complex to install and administer, and can be substantially expensive to purchase and maintain. Additionally, conventional software/hardware solutions face the potential problem of not obtaining important peripheral device information if one of more those devices happen to be powered down or otherwise non-operational when the conventional automated solution polls the non-operational peripheral device for the service related information.

The present invention seeks to provide improved communication with a peripheral device.

According to an aspect of the present invention there is provided a method of communicating by a peripheral device as specified in claim 1.

The following described embodiments address these and other problems of automatically obtaining data corresponding to the operations of networked peripheral devices.

In a distributed computing environment, the described subject matter is a peripheral device that responsive to being powered on, automatically communicates service related information to an entity associated with a service provider.

The present invention also provides a peripheral device which is operable to communicate automatically service related data to an entity.

Embodiments of the present invention are described below, by way of example only, with reference to the drawings, in which:
Fig. 1 shows an exemplary system to automatically harvest peripheral device operational data for communication to any number of entities (e.g., a computing device, an e-mail recipient, etc.) associated with a service provider site.
Fig. 2 shows an exemplary peripheral device to automatically communicate peripheral device operational data to a computing device, an e-mail recipient, and/or any other specified entity associated with a specialized service provider.
Fig. 3 shows an exemplary procedure to automatically communicate peripheral device operational data to an entity (e.g., a computing device, an e-mail address, etc.) corresponding to a dedicated service provider.

The described arrangements and procedures provide for automatically harvesting, or obtaining data corresponding to networked peripheral device operations. Specifically, networked peripheral devices such as printers utilize respective data harvesting utilities that execute on the peripheral device to automatically transmit operational data over a network to a service organization's centralized data repository server, specified e-mail recipients, and so on. Each data harvesting utility further allows for remote configuration of the peripheral device's automatic data communication capabilities, or attributes via a user interface (UI) that is communicated to a requester as a web page.

A peripheral device's data harvesting utility is automatically executed upon device power up. The harvesting utility determines its particular run-time settings for harvesting data from a configuration file. Such run-time settings include, for example, data harvest status (e.g., on or off), data harvesting time schedules, recipient network and/or e-mail address information, etc. Upon configuring its data harvesting operations, the data harvesting utility immediately performs a 'power-on" data harvest based on the determined configuration. Subsequent to this initial power on harvest, the utility will harvest data based on the determined data harvesting time schedules.

Periodically, the harvesting utility will evaluate its configuration file for updates to the utility's run-time settings. If such updates are identified, the peripheral device adjusts its data harvesting behavior based on the updated configuration. The data harvesting utility further provides for on-demand data harvesting and an e-mail testing feature to assist in administering the peripheral device' s communication settings and configuration.

### An Exemplary System

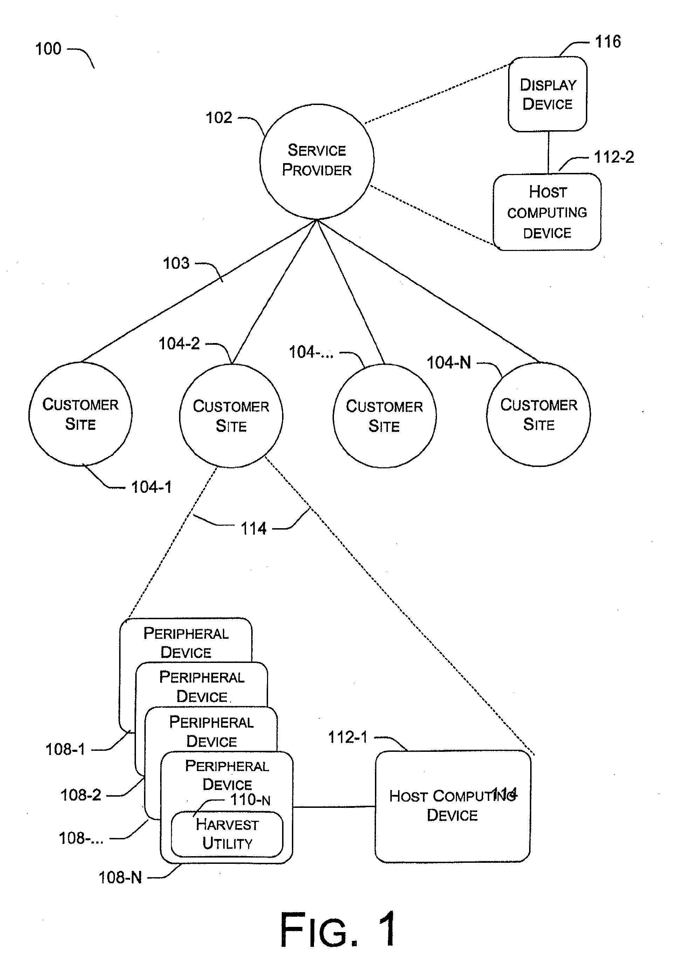

Fig. 1 shows an exemplary system to automatically harvest peripheral device operational data for communication to any number of entities (e.g., a computing device, an e-mail recipient, etc.) associated with a service provider site. The system 100 includes a service provider site 102 coupled across a communication path 103 to any number of customer sites 104. The service provider site 102 provides a specialized service (e.g., a consumables management service, a device management service, a customer support service, a pay-per-page printing or scanning service, or any service for that matter which can be supported using data from a peripheral device and such services are virtually unlimited, etc.) to each respective customer site 104.

The communication path 103 provides for electronic exchange of information using appropriate protocols (e.g., TCP/IP, UDP, SOAP, SMTP, HTTP, etc.) between the service provider site 102 and the any number of service provider sites 104. For instance, a respective communication path 103 can be a packet switched network such as an organizational intranet, the Internet, or other communication configurations.

Each customer site 104 includes any number of respective peripheral devices 108. For instance, customer site 104-2 includes peripheral devices 108-1 through 108-N. These peripheral devices 108 can be any sort of device such as a printer, a facsimile, a scanner, image processing devices, digital cameras, and so on. Each peripheral device 108 includes a data harvesting utility 110 to automatically harvest data from the particular peripheral device 108 and communicate the harvested data to an entity associated with service provider the service provider 102.

For instance, the harvest utility 110 can automatically communicate information to any computing device 112 that is directly or indirectly coupled to the peripheral device 108. The device 112 is an entity that is associated with the service provider site 102. Thus device 112 is the service provider 102 interface into the peripheral 108. This means that the device 112 can be a temporary or more permanent portal into the peripheral 108 that may or may not be provided by the customer environment 104 (i.e. it may be provided by the service provider 102). For instance, a device 112 may execute a browser application that receives data (e.g. a Web page) that is communicated from the peripheral device 108 for subsequent or simultaneous transfer of information corresponding to the operations of the peripheral device 108 to the service provider.

The example of Fig. 1 illustrates that the device 112-1 is coupled to a respective peripheral device 108 within the customer service site 104 (e.g., this is shown by the dotted lines 114 that provide an exploded view into the customer site 104-2) such as behind a firewall in an organizational intranet. However, it can be appreciated that the host computing device 112 need not be coupled to a corresponding peripheral device 108 within the customer site 104 (e.g., behind a corporate firewall), but could also be a device 112 outside of the customer site 104 such as a computing device 112-2 located at the service provider site 102, a device 112 (not shown) that has tunneled into the customer site 104 (e.g., using a virtual private network connection, a wireless API (WAPI), etc.), and so on.

### An Exemplary Peripheral Device

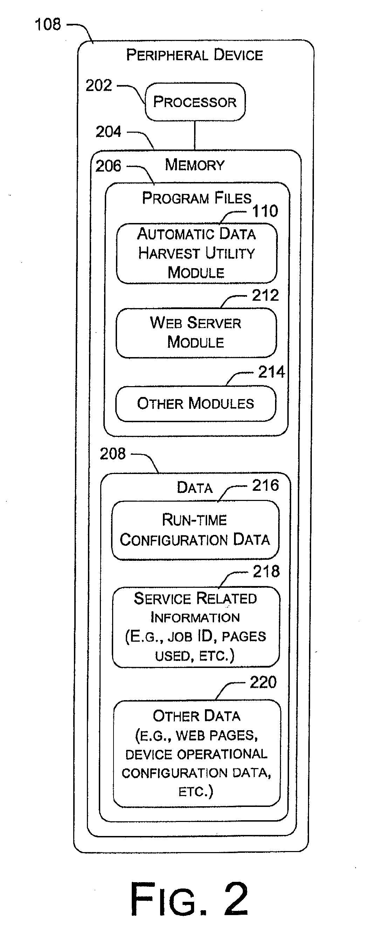

Fig. 2 shows an exemplary peripheral device 108 that is configured to automatically communicate peripheral device operational data to a computing device 112, an e-mail recipient at a device 112, and/or any other specified entity associated with the service provider site 102. The peripheral device 108 includes a processor 202 that is coupled to a system memory 204. The system memory includes any combination of volatile and non-volatile computer-readable media for reading and writing. Volatile computer-readable media includes, for example, random access memory (RAM). Nonvolatile computer-readable media includes, for example, read only memory (ROM), magnetic media such as a hard-disk, an optical disk drive, a floppy diskette, a flash memory card, a CD-ROM, etc.

The processor 202 is configured to fetch and execute computer program instructions from application programs 206 such as the automatic data harvest utility module 110, the Web server module 212, and other modules 214 such as an operating system, and so on. The processor also stores and fetches data 208 such as image run-time configuration data 216, service related information218 (e.g. job information, customer IDs, and syllables such as print media used, and so on), and other data 220, while executing the application programs 206.

The automatic data harvest utility module 110 automatically transmits operational data to a computing device 112 that is associated with the service provider site 102. The data harvest receiving computing device 112 can be identified in a number of manners such as via an Internet address, an e-mail address, and so on. The data harvest utility module 110 can be automatically loaded (e.g., programmatically, during device manufacture, etc.) onto the peripheral device 108.

For instance, the utility module 110 can be a Java program that is automatically downloaded by a peripheral device 108 from the service provider site 102 or a different site that is associated with the service provider site 102. Responsive to receiving such a Java program, the peripheral device 108 can automatically install and execute the received program. (Techniques to programmatically load and execute a Java program onto a computing device are known).

In another example, the data harvest utility module 110is stored in ROM 204 during manufacture of the peripheral).

Independent of how a particular peripheral device 108 obtains the automatic data harvest utility module 110, upon powering on the peripheral device 108 (i.e., device 108 "power-up"), the data harvest utility 110 is automatically executed During execution, the harvesting utility 110 automatically determines its particular run-time settings for harvesting data from a configuration file 216. Such run-time settings include, for example, data harvest status (e.g., on or off), data harvesting time schedules, recipient network and/or e-mail address information, the particular data attributes to collect from the peripheral device (e.g., amount of media (print or other) used, device status, device configuration, device ID, location, and so on).

The configuration file 216 can be in any of a number of various data formats. For instance, the configuration file 216 can be written in a markup language such as the Extensible Markup Language (XML), which includes customized tags that enable definition, transmission, validation, and interpretation of data between applications.

Upon configuring its data harvesting operations, the data harvesting utility 110 immediately performs a "power-on" data harvest based on the determined configuration. The power on data harvesting communicates the service related information218 to an entity 112 associated with the service provider site 102.

Subsequent to this initial power on harvest, the automatic data harvest utility 110 will periodically harvest peripheral device 108 operational data and communicate such harvested data 218 to one or more entities 112 based on the determined data harvesting time schedules (e.g., the harvesting schedules identified in the run-time configuration data 216).

The data harvester 110 utilizes an embedded Web server module 212 to communicate device 108 configuration information220 to the computing device 112 using either email (SMTP) or the hypertext transmission protocol (HTTP). For instance, responsive to receiving a request 220 from a service provider host computing device 112, the embedded Web server 212 communicates one or more Web pages 220 that utilize the hypertext markup language (HTML). Responsive to receiving such communicated Web pages 220, the service provider host 112, or more specifically a browser application (not shown) executing on a host device 112 presents the communicated Web pages 220 onto a display device (e.g., the display device 116 of Fig. 1). Besides providing information that corresponds to the operations of a respective peripheral device 108, such displayed web pages 220 may further provide for remote administration of the automatic data harvest utility module 110 operations.

The data harvesting utility module 110 periodically evaluates its run-time configuration data 216 to determine if any updates or changes have been made to the run-time settings stored therein. Such run-time settings 216 updates can be performed locally or remotely.

For instance, the data harvesting utility 110 is able to determine the particular attributes or data to "harvest" and subsequently communicate or report to the entity 112 associated with the service provider 102. To accomplish this, the configuration file 216 is an XML file that defines the particular attributes and/or data to be harvested by the utility 110. The service provider 102 can automatically update or modify the particular attributes and/or data represented in the configuration file 216 (e.g., via a web page served by the peripheral device 108, uploading a modified configuration file 216 to the peripheral device, or responsive to automatic or manual intervention, downloading a modified configuration file from an entity 112 associated with the service provider). In this manner, the data harvesting utility 110 is automatically updated with respect to service provider 102 data harvesting requirements without having to recompile and/or redistribute any executable portion of the automatic data harvesting utility 110.

If run-time setting 216 updates are identified, the data harvest utility 110 adjusts its data harvesting behavior based on the updated configuration 216. The data harvesting utility 110 further provides for on-demand data 218 harvesting and an e-mail testing feature to assist in administering and troubleshooting the peripheral device's 108 communication settings and configuration.

### An Exemplary Procedure

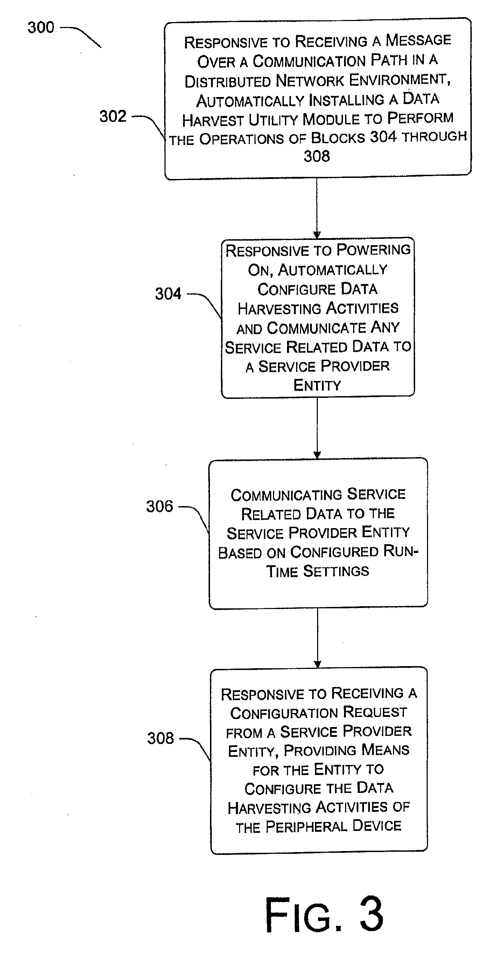

Fig. 3 shows an exemplary procedure 300 to automatically communicate data corresponding to service related operations of a peripheral device to an entity associated with a service provider 102. At block 302, the peripheral device 108, responsive to receiving a message over a communication path in a distributed network environment, automatically installs a data harvest utility module 110 to perform the following operations of blocks 304 through 308. (The received message either provides the data harvesting utility module 110, or indicates its location within a distributed network environment 100 of Fig. 1 (e.g., a location such as a URL). Alternatively, the data harvesting utility module 110 may already be installed on the peripheral device 108 (e.g., in ROM).

At block 304, the data harvesting utility 110, responsive to being powered on, automatically determines its data harvesting configuration and communicates service related data 218 to an entity 112 that is associated with a service provider site 102. At block 306, the data harvesting utility 110 periodically communicates the service related information218 to entities corresponding to the service provider site 102 according to the configured run-time settings 216.

At block 308, responsive to receiving a configuration request from an entity 112 associated with a service provider site 102, the data harvesting utility 110 communicates information220 to the requesting entity 112. This communicated information220 allows the requesting entity 112 to modify the run-time configuration data 216 on the peripheral device 108. Such communicated information220 can be one or more Web pages 220 communicated by the Web server module 212 for display at the requesting entity 112. Upon display of such peripheral device 108 data harvesting configuration web pages 220, they are available for administering the data harvesting operations of the peripheral device 108.

In this manner, the peripheral device 108 automatically communicates data corresponding to its run-time operations to an entity 112 that is associated with a specialized service provider 102.

### Computer-Readable Media

The subject matter of Figs. 1 through 3 is shown as being implemented in a suitable computing environment. Although not required, the subject matter is described in the general context of computer-executable instructions, such as the program modules 206 of Fig. 2 that are respectively executed by the peripheral device 108.

Program modules typically include routines, programs, objects, components, data structures, etc., that perform particular tasks or implement particular abstract data types. Additionally, those skilled in the art will appreciate that the described arrangements and procedures may be practiced with other computer system configurations, including multi-processor systems, microprocessor-based or programmable consumer electronics, network PCs, minicomputers, mainframe computers, and so on. In a distributed computing environment, program modules 206 may be located in both local and remote memory storage devices (computer-readable media).

### Conclusion

Although the subject matter has been described in language specific to structural features and/or methodological operations, it is understood that the arrangements and procedures defined in the appended claims is not necessarily limited to the specific features or operations described. Rather, the specific features and operations are disclosed as preferred forms of implementing the claimed subject matter.

The disclosures in United States patent application No. 10/099,345, from which this application claims priority, and in the abstract accompanying this application are incorporated herein by reference.

## Claims

1. A method of communicating, by a peripheral device (108), service related information to an entity (112) associated with a service provider in a distributed computing environment, the method comprising the step of automatically communicating by the peripheral device (108), in response to being powered on, service related data (218) to the entity (112).

2. A method as recited in claim 1, comprising the step of automatically communicating at periodic time intervals, by the peripheral device (108), service related data (218) to the entity (112) based on a number of tun-time settings (216).

3. A method as recited in claim 1 or 2, wherein the peripheral device (108) is an image processing device.

4. A method as recited in claim 1, 2 or 3, wherein the service related information (218) corresponds to a service selected from any combination of a group of services comprising consumables managament, a pay-per-page service, a device management service, and a customer support service.

5. A method as recited in any preceding claim, wherein the peripheral device (108) and the entity (112) are physically or virtually located in a common corporate network (108).

6. A method as recited in any preceding claim, wherein the entity (112) is a computing device (112-1) identified with a Universal Resource Locator (URL).

7. A method as recited in any preceding claim, wherein the entity (112) is identified by an e-mail address.

8. A method as recited any preceding claim, including the step of, responsive to receiving a computer program module (110) over a communication path (103) in the distributed computer environment (100), automatically installing the computer program module (110) on the peripheral device before communicating, the computer program module (110) being designed to perform the operations of automatically communicating the service related data (218) to the entity (112) upon power-up and periodically based on run-time settings (216).

9. A method as recited in any preceding claim, including the step of, responsive to receiving an updated configuration file (220), automatically reconfiguring the peripheral device (108) to communicate service related data (218) to the entity (112) based on settings in the updated configuration file (220).

10. A method as recited in any preceding claim, including the step of, responsive to receiving a request (308) from the entity (112), communicating a set of information (220) to the entity (112) to allow the entity (112) to configure data harvesting activities of the peripheral device (108).
